# EUROPEAN PATENT SPECIFICATION

(11) **EP 4 466 561 B1**
(45) Date of publication and mention of the grant of the patent: **19.02.2025**
(21) Application number: 23733415.6
(22) Date of filing: 12.06.2023
(51) Int. Cl.: G02B 7/182

(54) **TILTING DEVICE**
KIPPVORRICHTUNG
DISPOSITIF D'INCLINAISON

(30) Priority: 14.06.2022 GB 202208713
(43) Date of publication of application: 27.11.2024
(73) Proprietor: Machine Shop (Holdings) Limited, London NW10 7NH (GB)
(72) Inventor: THURSBY, Patrick, London NW10 7NH (GB); LOIBLE, Stephen James, London NW10 7NH (GB)
(74) Representative: Boult Wade Tennant LLP
(86) International application number: PCT/GB2023/051518
(87) International publication number: WO 2023/242539

(56) References cited:
- FR-A1- 2 823 573
- JP-A- 2017 116 514
- US-A1- 2023 025 141

## Description

### FIELD OF INVENTION

The present invention relates to a tilting device that comprises a tilt mechanism that allows an object to be tilted to a desired orientation. The present invention also relates to an array of tilting devices each having two-axis tilt mechanisms. The array may be a decorative artwork such as an array of mirrors, where the tilt mechanisms allow individual mirrors to be moved to provide an aesthetically pleasing effect.

### BACKGROUND

Tilt mechanisms are used to allow an object to be tilted to a desired orientation. Two-axis tilt mechanisms generally provide tilting about two orthogonal axes thereby allowing an object to be tilted into a wide variety of orientations.

Mirrors are often oriented using such tilt mechanisms to achieve a required alignment of the mirror within an optical instrument. Such tilt mechanisms frequently operate at a high level of precision, and so comprise mechanisms with small tolerances resulting in complexity and expense.

One contemplated use of the present invention is in an array of mirrored tiles that form a moving artwork in which the mirrored tiles may be tilted independently, in groups or all together to provide an attractive display. The array of mirrors may be provided as a decorative wall or as a decorative ceiling, or as decorative parts of a wall or ceiling.

FR2823573A1 describes a device that comprises a tilt correction stage extending between a mirror plate and a support plate. The device consists of at least two connecting rods defining two approximately secant axes relative to the optical center of the mirror and at least one linear actuator adapted so that the mirror can pivot about its optical center.

### SUMMARY

The invention is set out in the appended claims.

In a first aspect, there is provided a tilting device comprising a base, an object that tilts relative to the base, and a tilt mechanism operable to cause the object to tilt relative to the base. The tilt mechanism comprises a flexible link, a support and an actuator. The flexible link extends from the base to the object to create a first separation between the base and object. The support extends from the base to the object via a joint to create a second separation between the base and object. The joint may be located between the support and the base, between the support and the object or may be part of the support. The flexible link meets the object in a position displaced from where the support meets the object. The actuator is joined to the flexible link and is operable to deform the flexible link thereby varying the first separation between the base and the object. As flexible link meets the object in a position displaced from where the support meets the object, changing the first separation between the base and the object across the flexible link causes the object to tilt about a first axis of rotation of the joint.

Thus, a simple mechanism is achieved that tilts an object using a compliant arrangement in the form of a flexible link that is deformed to change the separation of the object from the base. This simplicity provides several advantages. For example, such a simple mechanism can be made to be very reliable and so requires less servicing. This makes the tilting device 10 ideal for deployment in hard to access areas. The simple mechanism is also lightweight, resulting in easier and less expensive installation requirements. Also the use of a flexible link results in very quiet operation and also inherent vibration damping.

The tilting device may further comprising at least one further object that tilts relative to the base, and a tilt mechanism for each of the at least one further objects operable to cause the respective one of the at least one further objects to tilt relative to the base. In the following, optional features of the tilting device will be described with reference to embodiments having only a single object to be tilted. However, the optional features apply equally well to embodiments of the tilting device having more than one object to be tilted. In these embodiments, the optional features described below may be present in one of the objects and its associated tilt mechanism, in all of the objects and their associated tilt mechanisms, or in some but not all objects and their associated tilt mechanisms.

The actuator comprises a lead screw joined to the flexible link by a threaded nut. Such an arrangement provides a simple means for changing the curvature and hence height of the flexible link. The threaded nut may be attached part way along the length of the flexible link between the base and the object. For example, the threaded nut may be attached to the flexible link at a position midway, or substantially midway, along its length. The lead screw may extend in a direction transverse to the first separation between the base and the object across the flexible link and transverse to the first axis of rotation of the joint.

The threaded nut may be brass or made from a polymer, the latter being advantageous as it allows lubricant-free operation which lessens service requirements. The threaded nut may be a zero backlash nut. Optionally, the actuator further comprises a stepper motor arranged to drive the leadscrew.

Optionally, the flexible link is a loop of flexible material whose curvature is changed as the flexible link is deformed by the actuator. The flexible link may be curved such as circular, part-circular, elliptical or part-elliptical in shape when viewed from the side when its relaxed state. The flexible link may be formed of two parts that together form a loop, for example two semi-circular parts. The actuator may extend across the loop and may be joined to the loop at opposed sides. Then, when the actuator is moved, the actuator may squeeze or relax the loop, hence providing the change in curvature and height of the loop. For example, the threaded nut may be secured to the loop at one side and a stepper motor may be secured to the opposite side of the loop. Conveniently, this allows the stepper motor, lead screw and threaded nut to move with the loop as the curvature of the loop and the first separation changes. Optionally, the loop is secured to the base and the object at opposed sides, such that the loop is joined to the base once, the object once and the actuator twice, at four positions which are equally spaced around the loop. To provide the required flexibility in the flexible link, it may comprise an elastomer such as polyurethane. The flexible link may have a hardness and/or thickness selected to provide the desired flexibility yet adequate support for the object to be tilted. For example, the flexible link may be an elastomer such as polyurethane with a Shore A hardness of 98 (or approximately 98) and/or a thickness of 4 mm to 7 mm (the thickness may not be uniform around the loop).

The tilting device may provide tilting of the object about two axes, for example two orthogonal axes. In this case, the flexible link may be a first flexible link and the actuator may be a first actuator. The tilt mechanism may further comprise a second flexible link extending from the base to the object to create a third separation between the base and object. The second flexible link may meet the object in a position displaced from where the support meets the object and where the first flexible link meets the object. The tilt mechanism may also further comprise a second actuator joined to the second flexible link that is operable to deform the second flexible link thereby varying the third separation between the base and the object such that the object tilts about a second axis of rotation of the joint.

Optionally, the first joint and the second joint of the tilt mechanism may comprise a single universal joint. Alternatively, the joint may be a composite joint comprising a first constrained pivot whose constrained axis of rotation defines the first axis and a second constrained pivot whose constrained axis of rotation defines the second axis. The first and second axes may be arranged orthogonally. Optionally, the first joint and the second joint are arranged adjacent to each other along the support. When the tilting device comprises more than one object, the first axes of the supports of the tilt mechanisms may be aligned with each other. Also, where present, the second axes or rotation of the joints may be aligned with each other.

Optionally, the object comprises or consists of a tile such as a coloured, patterned, textured and/or contoured tile. The tile may be a reflective tile such as a mirror. Optionally, the object comprises a tile supported by a platform, and the support(s) and flexible link(s) of that object are attached to the platform. Optionally, the tile may comprise mirror supported by the platform, such as a polycarbonate mirror. The platform may comprise a substrate and a plate, and the tile may comprise a mirror bonded to the substrate that is in turn joined to the plate, with the support and flexible link attached to the plate. The mirror may be a polycarbonate mirror and/or the substrate may be a foamed PVC substrate.

Where the tilting device comprises more than one tile, the tiles may form an array such as an array of tiles in a regular, repeating pattern. The tiles may share a corresponding size and shape, or may be arranged into corresponding pairs of tiles, where the tiles of each pair are mirror images of each other. Non-repeating patterns of tiles may also be used.

There is also provided an array of tilting devices comprising a mount and a plurality of any of the tilting devices described above, wherein the base of each tilting device is supported by the mount. The plurality of tilting devices may be arranged in repeating pattern. Optionally, the first axes of rotation of all supports of the tilting devices may be aligned. Also, where the supports include second joints, the second axes may also be aligned.

The array may form part of a structure, for example a wall comprising the array of tilting devices or a ceiling comprising the array of tilting. Alternatively, the array may form part of a freestanding structure. In any event, the structure may be part of a building or a vehicle, for example a publicly-accessible building such as a hotel or office, or a publicly-accessible vehicle such as a boat, ship, cruise liner, aeroplane, train, coach or bus.

### LIST OF FIGURES

In order that the invention can be more readily understood, reference will now be made by way of example only, to the accompanying drawings in which:
Figure 1 is a perspective view of an array of tilting mirrored tiles including four pairs of mirrored tiles;
Figure 2 is a perspective view of one of the pairs of mirrored tiles of Figure 1, viewed from below and to one side;
Figure 3 is a perspective view of the pair of mirrored tiles of Figure 2, viewed from above and to one side;
Figure 4 is an exploded view of the pair of mirrored tiles of Figure 2;
Figure 5 is a perspective, assembled view of a part of a tilt mechanism;
Figure 6 is a perspective, exploded view of the part of the tilt mechanism shown in Figure 5;
Figure 7 is a is a perspective, assembled view of a first type of support;
Figure 8 is a perspective, exploded view of the first type of support shown in Figure 7;
Figure 9 is a is a perspective, assembled view of a second type of support;
Figure 10 is a cross-sectional detail showing the attachment of a mirrored tile to a flexible band;and
Figure 11 is a cross-sectional detail showing the attachment of a mirrored tile to a support.

### DETAILED DESCRIPTION

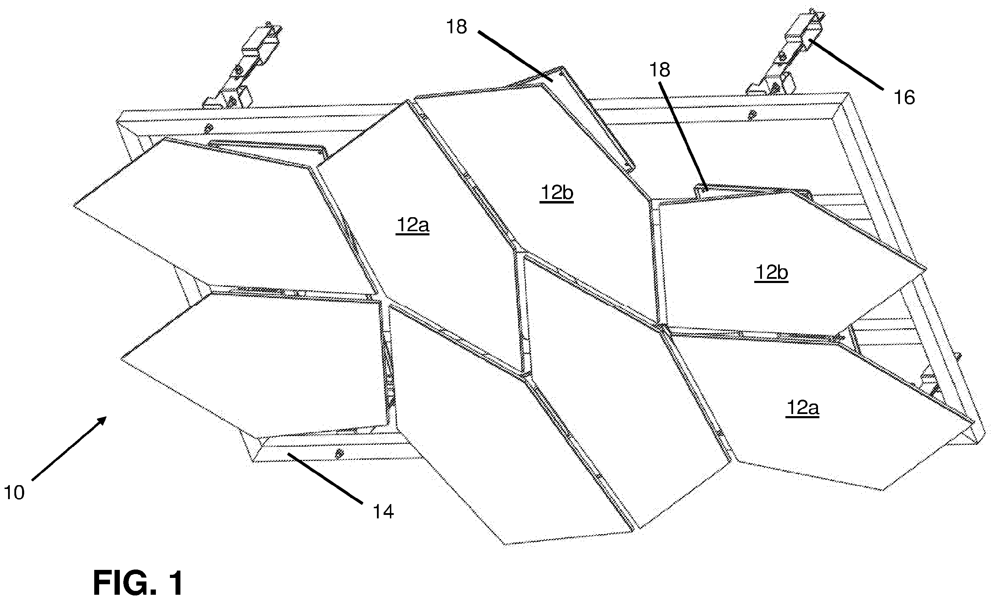

The figures show one particular application for tilting devices in accordance with embodiments of the present invention. While the tilting devices may be used in many different applications, Figure 1 shows their use in an application where the objects to be tilted are mirrored tiles. In particular, Figure 1 shows an array 10 of four tilting devices 11 each comprising a pair of mirrored tiles 12.

Each pair of tiles 12 comprises a tile 12a having a first shape, and a tile 12b having a second shape that is the mirror image of the first shape. The eight tiles 12 fit together to leave only small gaps between adjacent tiles 12.

The array 10 of mirrored tiles 12 are supported by a mount 14 that attaches to supporting structure (not shown) via four brackets 16. Anti-vibration fixings 16, for example including rubber blocks, may be used to attach the mount 14 to the supporting structure to help isolate vibrations in the supporting structure from being transmitted to the tilting tiles 12 and vice versa.

In this example, the array 10 of mirrored tiles 12 forms part of a suspended ceiling although many other applications are possible. Multiple arrays 10 may be arranged together to form a larger group of mirrored tiles 12, and the arrays 10 may be aligned such that tiles 12 of adjacent arrays 10 fit together to leave only small gaps between the tiles 12 of adjacent arrays 10. Plain ceiling panels may be provided around the peripheral tiles 12 such that the arrays 10 form an inset in the suspended ceiling.

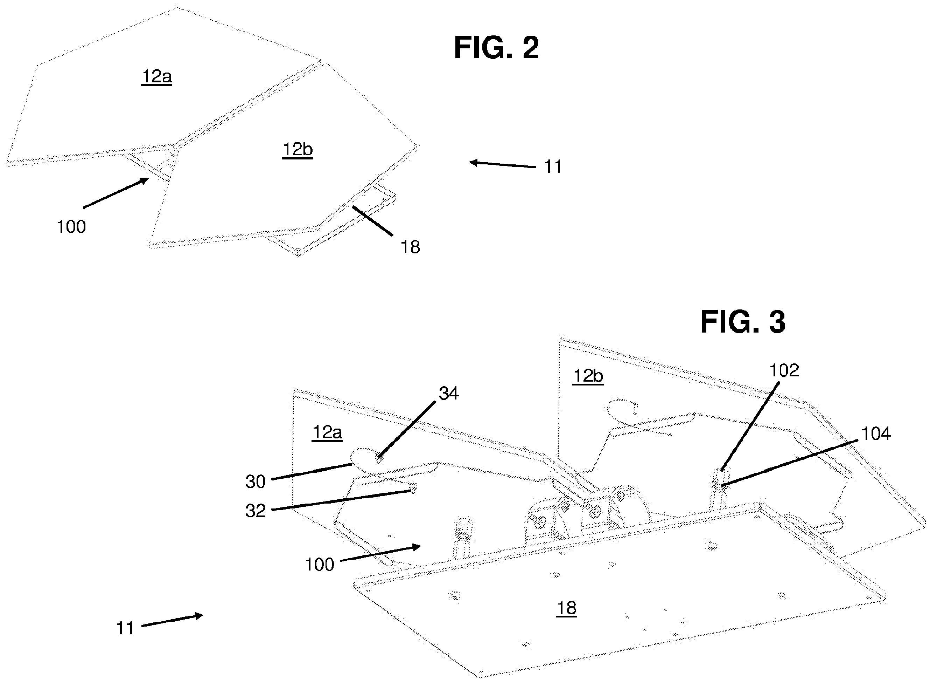

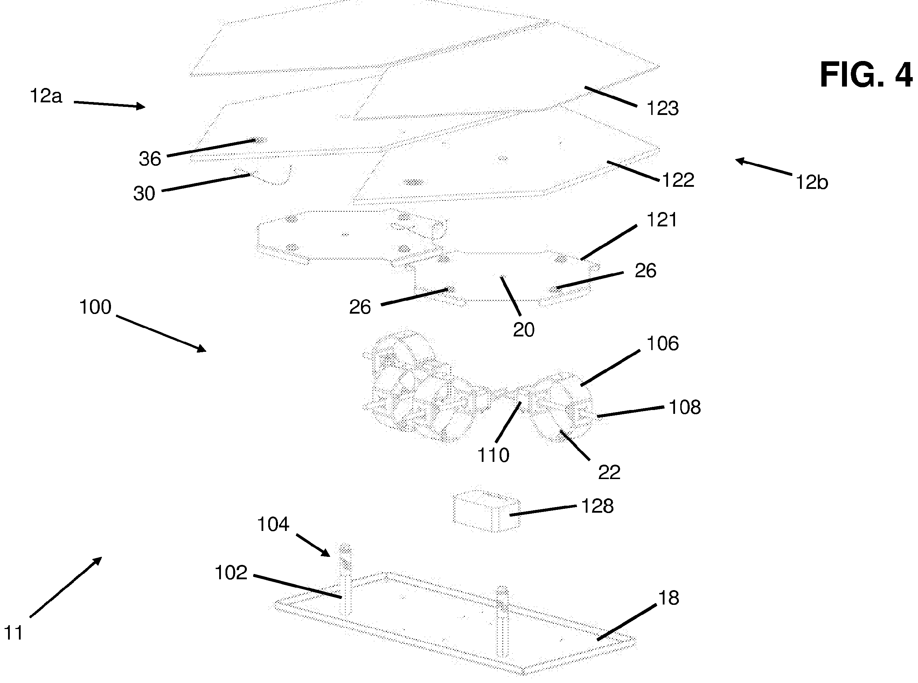

In this exemplary embodiment, each pair of tiles 12 is mounted to a shared base 18, and the four bases 18 are attached to the mount 14. Each tile 12 is connected to the base 18 by a tilt mechanism 100, as best seen in Figures 3 and 4. The tilt mechanism 100 comprises a support 102 that connects the tile 12 to the base 18 via a universal joint 104. The support 102 attaches to a central point 20 on the tile 12. The universal joint 104 acts as a fixed-point fulcrum that allows the mirrored tile 12 to pivot about two axes, as will be described in more detail below.

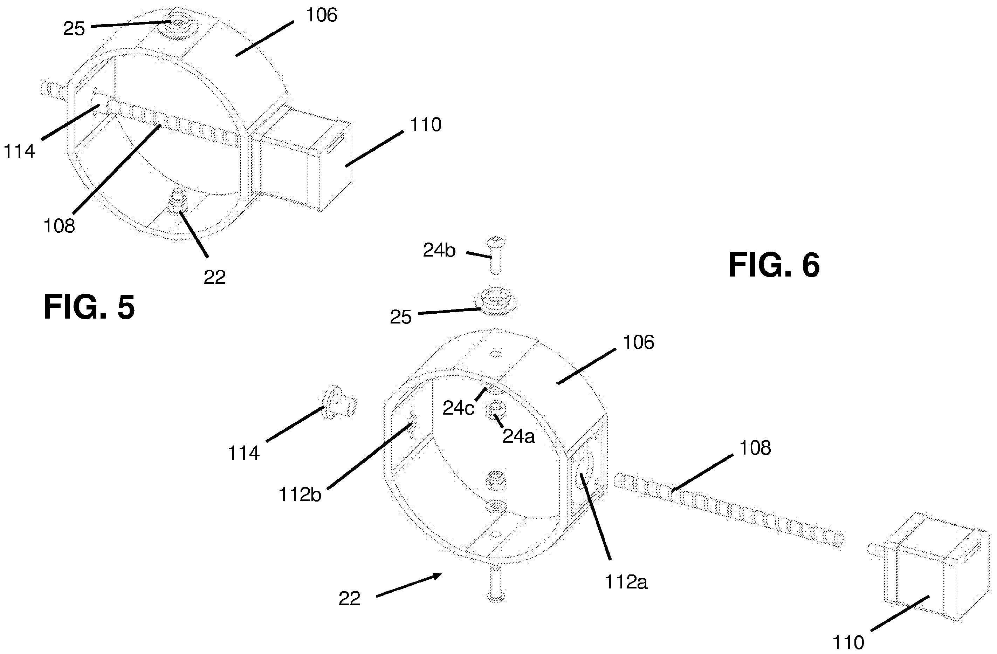

Movement about the two axes is effected using controlled deformation of compliant actuators, in this case a pair of flexible bands 106 driven by a lead screw 108. As best seen in Figures 5 and 6, each band 106 is formed from a strip of material that is approximately circular in shape when viewed from the side. Each band 106 is attached to a tile 12 and a base 18 at opposed sides of the band 106, thereby forming a flexible link to provide a first separation of the tile 12 from the base 18. This first separation between the tile 12 and the base 18 may be varied by deforming the band 106 such that the shape of the band 106 is changed, for example by flattening the band 106 into an elliptical shape. The first separation is increased when the major axis of the ellipsis is aligned with the first separation between the tile 12 and the base 18, and the first separation decreases when the minor axis of the ellipsis is aligned with the first separation. Each tile 12 is connected to one of the bases 18 by a pair of bands 106 that are oriented at right angles to each other.

Each band 106 is deformed by the action of the lead screw 108 driven by a stepper motor 110. The stepper motor 110 attaches to one side of the band 106, with the lead screw 108 extending through a pair of diametrically-opposed holes 112a, 112b provided in the band 106. The lead screw 108 extends from the stepper motor 110 through the first hole 112a and engages with a nut 114 held captive in the second hole 112b. The lead screw 108 is rotated by the stepper motor 110 and because the nut 114 is held in position by the band 106 such that it cannot rotate, the nut 114 moves along the lead screw 108 towards or away from the stepper motor 110. As the nut 114 moves closer towards or further away from the stepper motor 110, the band 106 is deformed such that its eccentricity changes and the attached tile 12 is moved.

Although the array 10 may be mounted in any orientation, the lead screw 108 may be used as a convenient line of reference to define the width to the band 106 and hence also the height of the band 106 that runs transverse to this width. Figures 3 and 4 show that each band 106 is connected to the base 18 and tile 12 across this height. Each band 106 attaches to the base 18 via a first fastener 22, and each band 106 is attached to the tile 12 via a second fastener 24. Each band 106 attaches to the tile 12 at respective off-centre points 26, displaced from the central point 20 where the associated support 102 of the tilt mechanism 100 attaches to the tile 12. This offset allows changes in the separation of the tile 12 and base 18 caused by deformation in one or both the bands 106 to effect a tilting of the tile 12 about the universal joint 104 of the support 102.

As described above, each band 106 is approximately circular when in a relaxed state. For any band 106, rotating the lead screw 108 such that the nut 114 moves towards the stepper motor 110 squeezes the band 106 such that its width narrows and its height increases. This sees an increase in the separation of the tile 12 from the base 18 at the off-centre point 26 where the band 106 is attached to the tile 12. As the tile 102 is attached to the support 102 at the central point 20, thereby fixing the separation at that point 20, the tile 12 tilts about the joint 104 provided in the support 102. Conversely, rotating the lead screw 108 in the other direction such that the nut 114 moves away from the stepper motor 110 forces the band 106 apart such that its width increases and its height decreases. This sees a decrease in the separation of the mirrored tile 12 from the base 18 at the off-centre point 26 where the band 106 is attached to the tile 12, such that the tile 12 tilts about the joint 104 provided in the support 102 in the other direction. Hence, coordinated rotation of both lead screws 108 associated with a mirrored tile 12 causes the limited orbital motion of the tile 12 about the fixed point fulcrum provided by the support 102.

Further features of preferred embodiments of the array 10 of tilting mirrored tiles 12 will now be described in more detail.

While a one-piece tile construction of each tile 12 may be used, Figures 1 to 4 show a three-layer construction used for each tile 12. Each tile 12 comprises a reflective layer 123 forming a mirror that is supported by a platform that comprises a plate 121 and a substrate 122. The plate 121 may be made from aluminium, and may be 2 mm thick. The substrate 122 may be made from foamed PVC, and may be 10 mm thick. The reflective layer 123 may be a mirrored polycarbonate, and may be 3 mm thick. The substrate 122 and reflective layer 123 may have a corresponding shape and size (excluding thickness), and may be bonded together, for example using spray adhesive.

The plate 121 attaches to the base 18 via three mechanisms, namely through the support 102 and through each of the two bands 106.

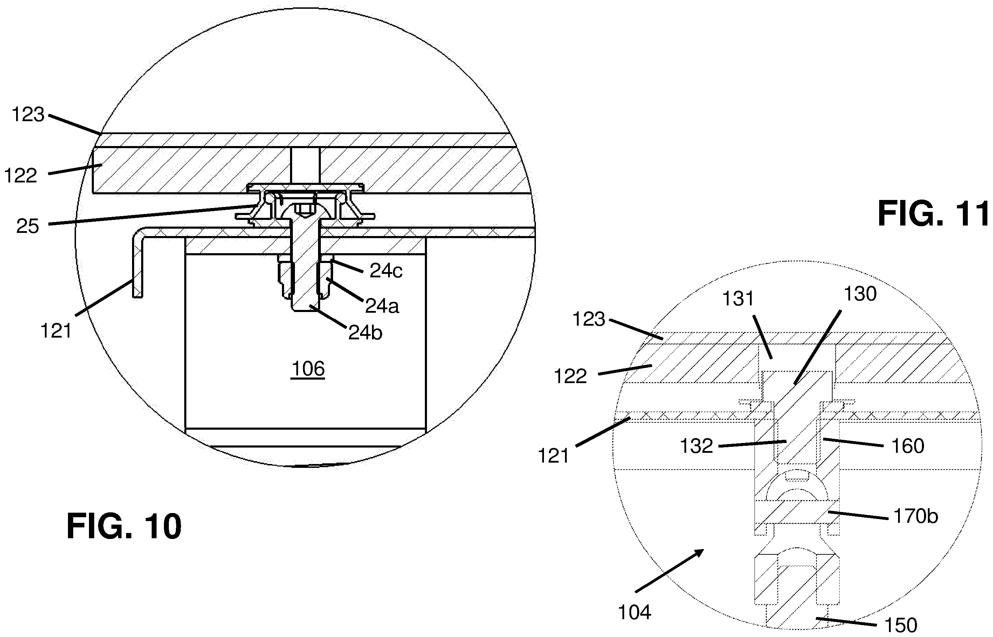

As best seen in Figure 10, the plate 121 attaches to each band 106 with fasteners 24. Each fastener 24 comprises a nut 24a, bolt 24b and washer 24c, with the bolt 24b extending through the plate 121 and the band 106, with the bolt head on the plate side, and the nut 24a on the band side. The head of the bolt 24b is received in a push-fit connection of a stand-off 25 that is received within a recess provided in the substrate 122. The stand-off 25 provides a gap between the plate 121 and the substrate 122 of the tile 12.

The plate 121 is approximately octagonal in shape, and is provided with four stand-offs 25 equally spaced around the plate 121, thereby allowing easier assembly as any one of four orientations may be used. The pair of bands 106 of one tile 12 attach to two of the stand-offs 25.

Figure 11 shows that the plate 121 attaches to the support 102 through a central aperture provided at the point 20. The support 102 is provided with a bolt 130 that screws into a threaded hole 132 provided in the end of the support 102. The plate 121 is sandwiched between the head of the bolt 130 and the end 160 of the support 102, and the head of the bolt 130 resides within a recess 131 provided in the substrate 122.

A further fail-safe connection is provided between the plate 121 and the substrate 122. A tether 30, for example a fine-wire tether, links the plate 121 and the substrate 122. The tether 30 attaches to a nut and bolt 32 provided through one of the spare stand-offs of the plate 121 and to another nut and bolt 34 provided in the substrate 122. The substrate 122 is provided with a stepped through-hole 36 to receive the bolt such that its head sits within the through-hole and does not interfere with the reflective layer 123.

The bands 106 must be flexible, and should be stiff enough not to sag under the weight of the tile 12, but supple enough not to require an overly powerful stepper motor 110 to deform the band 106. Also, the flexibility of the bands 106 contributes to damping vibrations that might otherwise be transmitted to the supporting structure. The flexibility of the bands 106 should also provide these advantageous properties over typical working temperatures experienced by the array 10 of mirrored tiles 12.

To provide these advantageous properties, a band 106 formed of an elastomer, such as a polyurethane compound, may be used. For example, polyurethanes obtained from Alchemie with part numbers PU3547 and PU3548 have been found to work well. The bands 106 may be formed of a material having a 98 Shore A hardness (or approximately a 98 Shore A hardness), and may be 4 mm to 7 mm thick. As can best be seen from Figure 5, the bands 106 may have a varying thickness, with the parts of the band 106 around the connection points being thicker (e.g. 7 mm) and being separated by thinner portions (e.g. 4 mm thickness). The bands 106 may be 3D printed or vacuum cast, which conveniently allows formation of the shaped outer surface around the attachment points for the stepper motor 110, the nut 114 and the fasteners 22 and 24 that are best seen in Figure 6.

Stepper motors 110 providing 0.5 Nm of torque have been found sufficient to operate the tilt mechanisms 100. An 8mm diameter lead screw 108 having a 10 mm pitch thread may be used. An anti-backlash nut 114 may be used, and the nut 114 may be brass or polymer. Preferably a lubrication free lead screw 108 and nut 114 combination is used, as this reduces dust collection and servicing requirements.

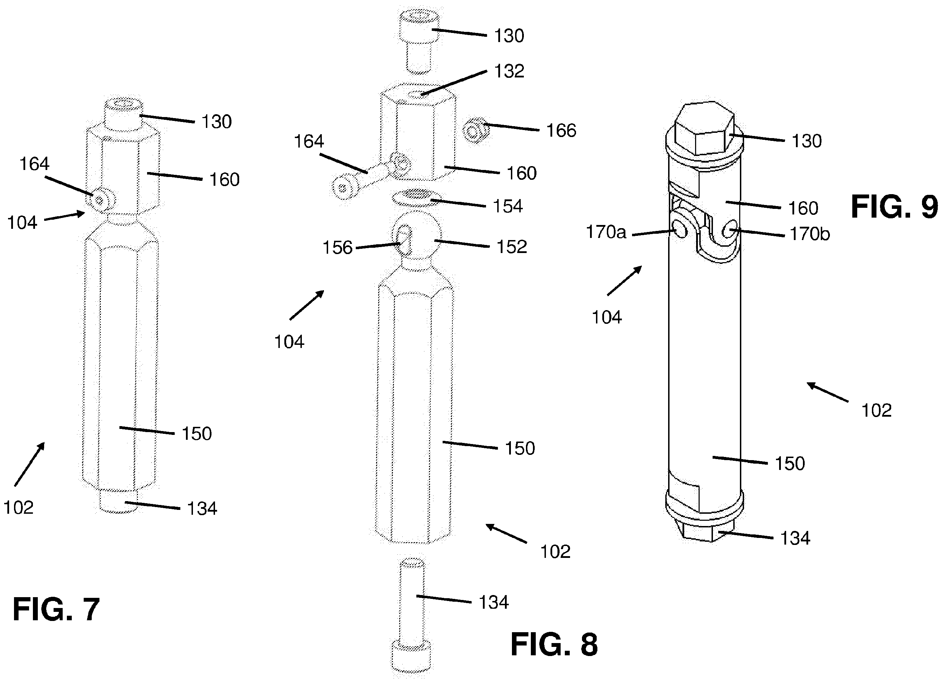

Figures 7 and 8 show a first type of support 102 that may be used in the tilt mechanisms 100 described above. The support 102 extends between the base 18 and the tile 12. A bolt 134 is used to fasten the support 102 to the base 18, and the bolt 130 fastens the support 102 to the plate 121 of the tile 12 as explained above.

In this embodiment, the support 102 includes a universal joint 104 that allows tilting about two axes, as will now be described. The support 102 includes a male part 150 and a female part 160, forming a ball and socket joint. The male part 150 is provided with the ball 152 at one end and the bolt 134 for attaching the support 102 to the base 18 at the other end. The female part 160 is provided with the socket 162 at one end, and the bolt 130 that secures the plate 121 and substrate 122 to the support 102 at the other end.

The universal joint 104 is constrained to move about two axes by a bolt 164 that extends through the female part 160 and an aperture 156 provided in the ball 152 of the male part 150. The aperture 156 is provided with wide ends and a narrow centre such that the bolt 164 may rock back and forth within the aperture 156, as best seen in Figure 8. This rocking within the ball 154 allows the universal joint 104 to tilt about a first axis. The nut 166 and bolt 164 are received within recesses provided in the female part 160, and the recesses are provided with rounded sides such that the nut 166 and bolt 164 do not engage with the sides of the recesses and so are free to rotate relative to the female part 160. This rotation of the female part 160 relative to the bolt 164 allows the universal joint 104 to tilt about a second axis. This design prevents the universal joint 104 from spinning about the longitudinal axis of the support 102 which would otherwise allow the mirrored tiles 12 to twist. Such twisting risks adjacent tiles 12 colliding and diminishes the aesthetic effect achieved by the array 10 of mirror tiles 12. A washer 154 made from a low-friction material like a plastic is also provided to ease rotation of the universal joint 104.

A second type of support 102 that may be used in the tilt mechanisms 100 described above is shown in Figure 9. The support 102 of Figure 9 is broadly similar to the support of Figured 7 and 8, and like reference numerals are used to refer to like parts. The main difference between the supports resides in the details of the joints 104. The support 102 of Figure 9 employs two pinned pivots to connect the two parts 150 and 160 of the support 102. One pin 170a connects two arms of one part 150 of the support 102, while the other pin 170b connects two arms of the other part 160 of the support 102. Both pins 170a,b are rotatably secured to the respective arms to allow the first part 150 to pivot relative to the second part 160. The pins 170a,b meet at their middles where they are joined (or the pins 170a,b could be a unitary piece). The two pins 170a,b are aligned at right angles to each other to provide tilting about two orthogonal axes.

As a further alternative, a support 102 having a simple ball joint may be used to allow for the required tilting motion. This is particularly suitable where rotation of the tiles about the support's longitudinal axis is not a problem, for example where the tiles are symmetric about that axis such as when they are circular.

The tiles 12 are moved under the direction of one or more electronic controllers, for example one or more computer processors, or one or more printed circuit boards, or a combination of both. The control of the individual tiles 12 may be implemented locally or globally. For example, a common controller may be used to control the tiles 12 of an array 10 or of multiple arrays 10 arranged together. Alternatively, local controllers may be provided (for example, one for each array 10 where multiple arrays 10 are arranged together). Also, local controllers may be provided with one controller per base 18 to service multiple tiles 12, or even one controller per tile 12. An example arrangement will now be described.

In a currently contemplated embodiment, multiple arrays 10 like the array 10 of Figure 1 are combined into an art installation. A master controller (not shown in the figures) provides global control of the mirrored tiles 12. For example, the master controller may be a programmed computer processor that provides the required signals for individual tiles 12 to move to provide predetermined artistic effects. For example, the tiles 12 may be tilted to provide ripple or wave effects across the installation, or to adopt striped or chequer-board appearances. Light may be projected onto the mirrored tiles 12 to provide further lighting effects, akin to a glitter ball.

The signals provided by the master controller are transmitted, via wired and/or wireless connections, to local controllers. Each tile 12 has a dedicated local controller, and each tilting device 11 houses its pair of local controllers in a shared enclosure 128. Each local controller may translate the signals received from the master controller into drive signals for the two stepper motors 110 associated with its tile 12, as well as performing supervisory functions such as enforcing tilt rate limits and tilt angle limits. Each tile 12 may be provided with an accelerometer and/or inclinometer (not shown) to provide information about the movement and/or orientation of the tile 12. This information may be provided to its local controller and/or a master controller to manage tilt rates and tilt angle of the tile 12. For example, the accelerometer and/or inclinometer may be used to provide the tilt angle of the tile 12 to the local controller 128 as part of a feedback loop to ensure correct positioning of the tile 12, and to mitigate drift in the tilt angle set for the tile 12 over time.

Arrays 10 of mirrored tiles 12 may be used in a variety of places, for example in dwellings such as hotels, holiday resorts, apartment complexes and domestic homes; in transport buildings such as railway, airport and shipping terminals; retail buildings like shopping centres and shops; and in work places such as office buildings and factories. Arrays 10 may also be used in transport vehicles such as planes, boats, buses and coaches.

By way of example, one contemplated application is in a cruise ship. Multiple arrays 10 may be installed to form part of the ceiling of an atrium in a cruise ship. Such an application presents particular problems. The cruise ship moves and adopts variable orientations as it pitches and rolls. Also, access to the arrays 10 once installed is problematic due to the ceiling height in atriums. Certain features of the embodiments described above and further adaptations may be made to accommodate these potential problems.

Lack of access can be addressed by ensuring high reliability and long service intervals. The simple nature of the flexible bands 106 driven by the lead screws 108 provides for good reliability and long service intervals, especially compared to more complex and sophisticated mechanisms found in mirror tilt mechanisms used in optical instruments. For example, traditional tilt mechanisms frequently use multiple high precision hinged joints, scissor mechanisms, and/or complex anti-backlash geared drive motors, all of which need more frequent servicing if they are to provide reliable operation. Also, adopting a lubrication free lead screw 108 and nut 114 combination extends service intervals.

Providing an accelerometer and/or inclinometer on each tile 12 allows the orientation of the tiles 12 to be determined. Providing suitable electronic control allows the orientation of the tiles 12 to be decoupled from any motion of the cruise ship. Hence, the array 10 may be operated to cause the tiles to tilt to positions relative to the cruise ship's structure or relative to the earth.

A person skilled in the art will appreciate that the above embodiments may be varied in many different respects without departing from the scope of the present invention that is defined by the appended claims.

For example, the object(s) to be tilted need not be mirrored tiles 12. For example, non-mirrored tiles with various surface colours, patterns, contours and textures may be used. The tiles need not be tessellated, but could comprise various shapes and differing gaps.

The objects to be tilted, such as the tiles 12 described above, need not be provided with two-axis tilt mechanism 100. For example, single-axis or three-axis tilt mechanisms may be provided. A single-axis tilt mechanism may be implemented in the embodiments described above by providing only a single band 106 per tile 12.

While the embodiments shown in the figures comprise circular band 106, other shapes may be used such as polygons (e.g. hexagons, octagons) or irregular polygons. For example, an octagonal band may be used with thickened sides for hosting the connections to the base 18, tile 12 and lead screw 108, and with the remaining sides being thinner: when deformed the thinner sides will curve more to accommodate the deformation. Moreover, the band need not comprise a complete loop of material. For example, broken loops may be used such as C-shaped bands 106. The embodiment of Figures 5 and 6 could be adapted such that the C-band extends from one fastener 22 to the other fastener 24 and to retain the nut 114: the stepper motor 110 may then be mounted to the base 18 rather than the band, for example using a mechanism to allow the stepper motor 110 to rise and fall with the C-band such as pin and slot arrangements. Alternatively, two C-bands may be paired to form a circle.

The figures show embodiments with two tiles 12 per base 18, but this may be freely varied with either fewer or more tiles 12 per base 18. Also a single base 18 may be provided for all tiles 12, and the mount 14 may provide such a common base 18. As noted above, a complete installation might comprise multiple arrays 10 like those described above or just a single array 10.

Many different types of connections between the parts of the array 10 may be used. Examples are provided for the brackets 16, fasteners 22 and 24, and nuts and bolts 32 and 34, but these may be varied as desired.

## Claims

1. A tilting device (11) comprising:
a base (18);
an object that tilts relative to the base; and
a tilt mechanism (100) operable to cause the object to tilt relative to the base;
wherein the tilt mechanism comprises:
a flexible link extending from the base to the object to create a first separation between the base and object;
a support (102) extending from the base to the object via a joint to create a second separation between the base and object, wherein the flexible link meets the object in a position displaced from where the support meets the object; and
an actuator joined to the flexible link that is operable to deform the flexible link thereby varying the first separation between the base and the object such that the object tilts about a first axis of rotation of the joint;
**characterized in that**, in the or each tilt mechanism, the actuator comprises a lead screw (108) joined to the flexible link by a threaded nut.

2. The tilting device of claim 1, further comprising:
at least one further object that tilts relative to the base; and
a tilt mechanism for each of the at least one further objects operable to cause the respective one of the at least one further objects to tilt relative to the base.

3. The tilting device of any of the preceding claims wherein, in the or each tilt mechanism, the lead screw extends in a direction transverse to the first separation between the base and the object, and transverse to the first axis of rotation of the joint; and optionally
wherein, in the or each tilt mechanism, the actuator further comprises a stepper motor arranged to drive the leadscrew.

4. The tilting device of any preceding claim wherein, in the or each tilt mechanism, at least one of:
a) the extent of the flexible link defines the first separation between the base and object;
b) the flexible link is secured directly to the object and to the base thereby extending from the base to the object; and
c) the flexible link is an elastomer such as polyurethane.

5. The tilting device of any preceding claim wherein, in the or each tilt mechanism, the flexible link is a loop of flexible material whose curvature is changed as the flexible link is deformed by the actuator.

6. The tilting device of claim 5 wherein, in the or each tilt mechanism, the actuator extends across the loop and is joined to the loop at opposed sides, such that the actuator is operable to squeeze or relax the loop; and optionally
wherein, in the or each tilt mechanism, the loop is secured to the base and the object at opposed sides, such that the loop is joined to the base once, the object once and the actuator twice, at four positions which are equally spaced around the loop.

7. The tilting device of any preceding claim wherein, in the or each tilt mechanism:
the flexible link is a first flexible link and the actuator is a first actuator; and
the tilt mechanism further comprises:
a second flexible link extending from the base to the object to create a third separation between the base and object, wherein the second flexible link meets the object in a position displaced from where the support meets the object and where the first flexible link meets the object; and
a second actuator joined to the second flexible link that is operable to deform the second flexible link thereby varying the third separation between the base and the object such that the object tilts about a second axis of rotation of the joint.

8. The tilting device of claim 7 wherein, in the or each tilt mechanism, one of:
a) the joint is a composite joint comprising a first constrained pivot whose constrained axis of rotation defines the first axis and a second constrained pivot whose constrained axis of rotation defines the second axis, optionally, wherein the first and second axes are arranged orthogonally; and
b) the joint comprises a universal joint free to rotate about both the first and second axes.

9. The tilting device of any preceding claim when dependent upon claim 2, wherein the first axes of the supports of the tilt mechanisms are aligned; and optionally
wherein the second axes of the supports of the tilt mechanisms are aligned.

10. The tilting device of any preceding claim, wherein the or each object comprises a tile; and optionally
wherein the or each tile is coloured, patterned, textured or contoured, or any combination thereof.

11. The tilting device of claim 10, wherein the or each object comprises the tile supported by a platform, and the support(s) and flexible link(s) of that object are attached to the platform; and optionally
wherein the or each tile is a mirror supported by the platform.

12. The tilting device of claim 11, wherein:
the or each platform comprises a substrate and a plate,
the or each tile is a polycarbonate mirror that is bonded to its respective substrate that is, in turn, joined to its respective plate;
the support(s) and flexible link(s) of the or each tile are secured to its respective plate; and optionally
wherein at least one of:
a) the or each plate is separated from its respective substrate by stand-offs; and
b) the or each substrate comprises foamed PVC.

13. The tilting device of any of claims 10-12, comprising an array of the tiles arranged in a repeating pattern; and optionally
wherein one of:
a) the tiles share a corresponding size and shape; and
b) the tiles are arranged into corresponding pairs, the tiles of each pair being mirror images of each other.

14. An array of tilting devices comprising:
a mount; and
a plurality of tilting devices each in accordance with any preceding claim, wherein the base of each tilting device is supported by the mount.

15. The array of claim 14, wherein the plurality of tilting devices are arranged in repeating pattern.

## Patentansprüche

1. Kippvorrichtung (11), umfassend:
eine Basis (18);
ein Objekt, welches relativ zu der Basis kippt; und
einen Kippmechanismus (100), welcher betätigbar ist, um zu bewirken, dass das Objekt relativ zu der Basis kippt;
wobei der Kippmechanismus umfasst:
ein flexibles Verbindungsstück, welches sich von der Basis zu dem Objekt erstreckt, um eine erste Trennung zwischen der Basis und dem Objekt zu erzeugen,
eine Halterung (102), welche sich mittels eines Anschlussstücks von der Basis zu dem Objekt erstreckt, um eine zweite Trennung zwischen der Basis und dem Objekt zu erzeugen, wobei das flexible Verbindungsstück auf das Objekt in einer Position trifft, welche von der Stelle beabstandet ist, an welcher die Halterung auf das Objekt trifft, und
einen Aktuator, welcher mit dem flexiblen Verbindungsstück verbunden ist und welcher betätigbar ist, um das flexible Verbindungsstück zu deformieren, wodurch die erste Trennung zwischen der Basis und dem Objekt derart variiert wird, dass das Objekt um eine erste Drehachse des Anschlussstücks kippt;
**dadurch gekennzeichnet, dass** in dem oder in jedem Kippmechanismus der Aktuator eine Leitspindel (108) umfasst, welche durch eine Gewindemutter mit dem flexiblen Verbindungsstück verbunden ist.

2. Kippvorrichtung nach Anspruch 1, ferner umfassend:
wenigstens ein weiteres Objekt, welches relativ zu der Basis kippt; und
einen Kippmechanismus für jedes aus dem wenigstens einen weiteren Objekt, welches betätigbar ist, um zu bewirken, dass das jeweilige eine aus dem wenigstens einen weiteren Objekt relativ zu der Basis kippt.

3. Kippvorrichtung nach einem der vorhergehenden Ansprüche, wobei, in dem oder in jedem Kippmechanismus, sich die Leitspindel in einer Richtung erstreckt, welche transversal zu der ersten Trennung zwischen der Basis und dem Objekt ist und welche transversal zu der ersten Drehachse des Anschlussstücks ist; und optional
wobei, in dem oder in jedem Kippmechanismus, der Aktuator ferner einen Schrittmotor umfasst, welche dazu angeordnet ist, die Leitspindel anzutreiben.

4. Kippvorrichtung nach einem jeglichen vorhergehenden Anspruch, wobei, in dem oder in jedem Kippmechanismus, wenigstens eines vorhanden ist, aus:
a) die Erstreckung des flexiblen Verbindungsstücks die erste Trennung zwischen der Basis und dem Objekt definiert,
b) das flexible Verbindungsstück direkt an dem Objekt und an der Basis gesichert ist, wodurch es sich von der Basis zu dem Objekt erstreckt, und
c) das flexible Verbindungsstück ein Elastomer ist, beispielsweise Polyurethan.

5. Kippvorrichtung nach einem jeglichen vorhergehenden Anspruch, wobei, in dem oder in jedem Kippmechanismus, das flexible Verbindungsstück eine Schlaufe aus flexiblem Material ist, dessen Krümmung sich ändert, wenn das flexible Verbindungsstück durch den Aktuator deformiert wird.

6. Kippvorrichtung nach Anspruch 5, wobei, in dem oder in jedem Kippmechanismus, sich der Aktuator über die Schlaufe erstreckt und mit der Schlaufe an entgegengesetzten Seiten verbunden ist, sodass der Aktuator betätigbar ist, um die Schlaufe zu verengen oder sie zu lockern; und optional
wobei, in dem oder in jedem Kippmechanismus, die Schlaufe an der Basis und an dem Objekt an entgegengesetzten Seiten gesichert ist, sodass die Schlaufe an vier Positionen, welche gleichmäßig um die Schlaufe beabstandet sind, einmal mit der Basis, einmal mit dem Objekt und zweimal mit dem Aktuator verbunden ist.

7. Kippvorrichtung nach einem jeglichen vorhergehenden Anspruch, wobei, in dem oder in jedem Kippmechanismus:
das flexible Verbindungsstück ein erstes flexibles Verbindungsstück ist und der Aktuator ein erster Aktuator ist; und
der Kippmechanismus ferner umfasst:
ein zweites flexibles Verbindungsstück, welches sich von der Basis zu dem Objekt erstreckt, um eine dritte Trennung zwischen der Basis und dem Objekt zu erzeugen, wobei das zweite flexible Verbindungsstück auf das Objekt in einer Position trifft, welche von der Stelle beabstandet ist, an welcher die Halterung auf das Objekt trifft und an welcher das erste flexible Verbindungsstück auf das Objekt trifft, und
einen zweiten Aktuator, welcher mit dem zweiten flexiblen Verbindungsstück verbunden ist und welcher betätigbar ist, um das zweite flexible Verbindungsstück zu deformieren, wodurch die dritte Trennung zwischen der Basis und dem Objekt derart variiert wird, dass das Objekt um eine zweite Drehachse des Anschlussstücks kippt.

8. Kippvorrichtung nach Anspruch 7, wobei, in dem oder in jedem Kippmechanismus, eines vorhanden ist, aus:
a) das Anschlussstück ein Komposit-Anschlussstück ist, welches einen ersten eingeschränkten Drehpunkt, dessen eingeschränkte Drehachse die erste Achse definiert, und einen zweiten eingeschränkten Drehpunkt umfasst, dessen eingeschränkte Drehachse die zweite Achse definiert, optional wobei die erste und zweite Achse orthogonal angeordnet sind; und
b) das Anschlussstück ein Universalanschlussstück umfasst, welches zur Drehung um sowohl die erste als auch die zweite Achse frei ist.

9. Kippvorrichtung nach einem jeglichen vorhergehenden Anspruch, wenn abhängig von Anspruch 2, wobei die ersten Achsen der Halterungen der Kippmechanismen aligniert sind; und optional
wobei die zweiten Achsen der Halterungen der Kippmechanismen aligniert sind.

10. Kippvorrichtung nach einem jeglichen vorhergehenden Anspruch, wobei das oder jedes Objekt eine Kachel umfasst, und optional
wobei die oder jede Kachel farbig, gemustert, strukturiert oder konturiert, oder eine Kombination davon ist.

11. Kippvorrichtung nach Anspruch 10, wobei das oder jedes Objekt die Kachel umfasst, welche durch eine Plattform gehaltert ist, und wobei die Halterung(en) und das/die flexible(n) Verbindungsstück(e) dieses Objekts an der Plattform befestigt sind; und optional
wobei die oder jede Kachel ein Spiegel ist, welcher durch die Plattform gehaltert ist.

12. Kippvorrichtung nach Anspruch 11, wobei:
die oder jede Plattform ein Substrat und eine Platte umfasst,
die oder jeder Kachel ein Polykarbonat-Spiegel ist, welcher mit seinem jeweiligen Substrat verbunden ist, welches wiederum mit seiner jeweiligen Platte verbunden ist;
die Halterung(en) und das/die flexible(n) Verbindungsstück(e) der oder jeder Kachel an seiner jeweiligen Platte gesichert sind; und optional
wobei wenigstens eines vorhanden ist, aus:
a) die oder jede Platte von seinem jeweiligen Substrat durch Distanzhalter getrennt ist/sind; und
b) das oder jedes Substrat geschäumtes PVC umfasst.

13. Kippvorrichtung nach einem der vorhergehenden Ansprüche 10-12, umfassend eine Anordnung der Kacheln, welche in einem sich wiederholenden Muster angeordnet sind; und optional
wobei eines vorhanden ist, aus:
a) die Kacheln eine übereinstimmende Größe und Form teilen; und
b) die Kacheln in übereinstimmenden Paaren angeordnet sind, wobei die Kacheln jedes Paares Spiegelbilder voneinander sind.

14. Anordnung von Kippvorrichtungen, umfassend:
eine Befestigung; und
eine Mehrzahl von Kippvorrichtungen, jeweils gemäß einem jeglichen vorhergehenden Anspruch, wobei die Basis jeder Kippvorrichtung durch die Befestigung gehaltert ist.

15. Anordnung nach Anspruch 14, wobei die Mehrzahl von Kippvorrichtungen in einem sich wiederholenden Muster angeordnet sind.

## Revendications

1. Dispositif inclinable (11) comprenant :
une base (18) ;
un objet qui s'incline par rapport à la base ; et
un mécanisme d'inclinaison (100) pouvant fonctionner pour amener l'objet à s'incliner par rapport à la base ;
dans lequel le mécanisme d'inclinaison comprend :
une liaison flexible s'étendant de la base à l'objet pour créer une première séparation entre la base et l'objet ;
un support (102) s'étendant de la base à l'objet par l'intermédiaire d'un joint pour créer une seconde séparation entre la base et l'objet, dans lequel la liaison flexible rencontre l'objet en une position décalée du point où le support rencontre l'objet ; et
un actionneur lié à la liaison flexible qui peut fonctionner pour déformer la liaison flexible, faisant ainsi varier la première séparation entre la base et l'objet de sorte que l'objet s'incline autour d'un premier axe de rotation du joint ;
**caractérisé en ce que**, dans le ou chaque mécanisme d'inclinaison, l'actionneur comprend une vis mère (108) liée à la liaison flexible par un écrou fileté.

2. Dispositif inclinable selon la revendication 1, comprenant en outre :
au moins un autre objet qui s'incline par rapport à la base ; et
un mécanisme d'inclinaison pour chacun de l'au moins un autre objet pouvant fonctionner pour amener l'autre objet respectif de l'au moins un autre objet à s'incliner par rapport à la base.

3. Dispositif inclinable selon l'une quelconque des revendications précédentes dans lequel, dans le ou chaque mécanisme d'inclinaison, la vis mère s'étend dans une direction transversale à la première séparation entre la base et l'objet, et transversale au premier axe de rotation du joint ; et éventuellement
dans lequel, dans le ou chaque mécanisme d'inclinaison, l'actionneur comprend en outre un moteur pas à pas conçu pour entraîner la vis mère.

4. Dispositif inclinable selon une quelconque revendication précédente dans lequel, dans le ou chaque mécanisme d'inclinaison, au moins l'un parmi :
a) l'étendue de la liaison flexible définit la première séparation entre la base et l'objet ;
b) la liaison flexible est directement fixée à l'objet et à la base, s'étendant ainsi de la base à l'objet ; et
c) la liaison flexible est un élastomère tel que le polyuréthane.

5. Dispositif inclinable selon une quelconque revendication précédente dans lequel, dans le ou chaque mécanisme d'inclinaison, la liaison flexible est une boucle de matériau flexible dont la courbure est modifiée à mesure que la liaison flexible est déformée par l'actionneur.

6. Dispositif inclinable selon la revendication 5 dans lequel, dans le ou chaque mécanisme d'inclinaison, l'actionneur s'étend sur la boucle et est lié à la boucle sur des côtés opposés, de sorte que l'actionneur puisse fonctionner pour comprimer ou relâcher la boucle ; et éventuellement
dans lequel, dans le ou chaque mécanisme d'inclinaison, la boucle est fixée à la base et à l'objet sur des côtés opposés, de sorte que la boucle soit liée une fois à la base, une fois à l'objet et deux fois à l'actionneur, en quatre positions qui sont équidistantes autour de la boucle.

7. Dispositif inclinable selon une quelconque revendication précédente dans lequel, dans le ou chaque mécanisme d'inclinaison :
la liaison flexible est une première liaison flexible et l'actionneur est un premier actionneur ; et
le mécanisme d'inclinaison comprend en outre :
une seconde liaison flexible s'étendant de la base à l'objet pour créer une troisième séparation entre la base et l'objet, dans lequel la seconde liaison flexible rencontre l'objet en une position décalée du point où le support rencontre l'objet et où la première liaison flexible rencontre l'objet ; et
un second actionneur lié à la seconde liaison flexible qui peut fonctionner pour déformer la seconde liaison flexible, faisant ainsi varier la troisième séparation entre la base et l'objet de sorte que l'objet s'incline autour d'un second axe de rotation du joint.

8. Dispositif inclinable selon la revendication 7 dans lequel, dans le ou chaque mécanisme d'inclinaison, l'un parmi :
a) le joint est un joint composite comprenant un premier pivot limité dont l'axe de rotation limité définit le premier axe et un second pivot limité dont l'axe de rotation limité définit le second axe, éventuellement, dans lequel les premier et second axe sont agencés perpendiculairement ; et
b) le joint comprend un joint universel pouvant tourner librement à la fois autour du premier axe et du second axe.

9. Dispositif inclinable selon une quelconque revendication précédente lorsqu'elle dépend de la revendication 2, dans lequel les premiers axes des supports des mécanismes d'inclinaison sont alignés ; et éventuellement
dans lequel les seconds axes des supports des mécanismes d'inclinaison sont alignés.

10. Dispositif inclinable selon une quelconque revendication précédente, dans lequel le ou chaque objet comprend une tuile ; et éventuellement
dans lequel la ou chaque tuile est colorée, à motifs, texturée ou profilée, ou une quelconque combinaison de ceux-ci .

11. Dispositif inclinable selon la revendication 10, dans lequel le ou chaque objet comprend la tuile supportée par une plate-forme, et le ou les support (s) et la ou les liaison(s) flexible(s) de cet objet sont fixés à la plate-forme ; et éventuellement
dans lequel la ou chaque tuile est un miroir supporté par la plate-forme.

12. Dispositif inclinable selon la revendication 11, dans lequel :
la ou chaque plate-forme comprend un substrat et une plaque,
la ou chaque tuile est un miroir en polycarbonate qui est lié à son substrat respectif qui est, à son tour, lié à sa plaque respective ;
le ou les support(s) et la ou les liaison(s) flexible(s) de la ou chaque tuile sont fixés à sa plaque respective ; et éventuellement
dans lequel au moins l'un parmi :
a) la ou chaque plaque est séparée de son substrat respectif par des séparateurs ; et
b) le ou chaque substrat comprend du PVC expansé.

13. Dispositif inclinable selon l'une quelconque des revendications 10 à 12, comprenant un réseau de tuiles agencées en un motif répétitif ; et éventuellement
dans lequel l'un parmi :
a) les tuiles partagent une taille et une forme correspondantes ; et
b) les tuiles sont agencées par paires correspondantes, les tuiles de chaque paire étant des images miroirs l'une de l'autre.

14. Réseau de dispositifs inclinables comprenant :
un bâti ; et
une pluralité de dispositifs inclinables chacun selon une quelconque revendication précédente, dans lequel la base de chaque dispositif inclinable est supportée par le bâti.

15. Réseau selon la revendication 14, dans lequel la pluralité de dispositifs inclinables sont agencés en un motif répétitif.
